(19) Europäisches Patentamt
European Patent Office
Office européen des brevets

(11) EP 2 945 457 B1

(12) EUROPEAN PATENT SPECIFICATION

(45) Date of publication and mention
of the grant of the patent:
**17.04.2019 Bulletin 2019/16**

(51) Int Cl.:
**H04W 84/18** *(2009.01)* **H04L 12/715** *(2013.01)*
**H04W 40/32** *(2009.01)*

(21) Application number: **14305708.1**

(22) Date of filing: **14.05.2014**

(54) **Sensor clustering and data aggregation in wireless sensor networks**

Strukturieren von Sensoren in Klastern und Aggregation von Daten in drahtlosen Sensornetzwerken

Groupement de capteurs et aggrégation des données dans réseaux de capteurs sans fil

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.11.2015 Bulletin 2015/47**

(73) Proprietor: **Alcatel Lucent**
**91620 Nozay (FR)**

(72) Inventors:
• **Fonseca dos Santos, André**
**70345 Stuttgart (DE)**
• **Mohammad, Tauhidul Islam**
**70435 Stuttgart (DE)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
• **HEO TAEWOOK ET AL: "Adaptive dual prediction scheme based on sensing context similarity for wireless sensor networks", ELECTRONICS LETTERS, IEE STEVENAGE, GB, vol. 50, no. 6, 13 March 2014 (2014-03-13) , pages 467-469, XP006046853, ISSN: 0013-5194, DOI: 10.1049/EL.2014.0165**
• **ZHIDAN LIU ET AL: "An energy-efficient data collection scheme for wireless sensor networks", ADVANCED COMMUNICATION TECHNOLOGY (ICACT), 2013 15TH INTERNATIONAL CONFERENCE ON, IEEE, 27 January 2013 (2013-01-27), pages 60-65, XP032349666, ISBN: 978-1-4673-3148-7**
• **DANIELA TULONE ET AL: "An energy-efficient querying framework in sensor networks for detecting node similarities", PROCEEDINGS OF THE 9TH ACM INTERNATIONAL SYMPOSIUM ON MODELING ANALYSIS AND SIMULATION OF WIRELESS AND MOBILE SYSTEMS , MSWIM '06, 1 January 2006 (2006-01-01), page 191, XP055137164, New York, New York, USA DOI: 10.1145/1164717.1164768 ISBN: 978-1-59-593477-2**
• **JUNPEI KAMIMURA ET AL: "Energy-Efficient Clustering Method for Data Gathering in Sensor Networks", OSAKA UNIVERSITY, 10 August 2004 (2004-08-10), XP055137144,**
• **QINGQUAN ZHANG ET AL: "Cooperative data reduction in wireless sensor network", GLOBAL COMMUNICATIONS CONFERENCE (GLOBECOM), 2012 IEEE, IEEE, 3 December 2012 (2012-12-03), pages 628-633, XP032374740, DOI: 10.1109/GLOCOM.2012.6503183 ISBN: 978-1-4673-0920-2**

## Description

Embodiments of the present disclosure relate to methods, apparatuses, and computer programs for wireless sensor networks making use of correlations between measurements of different sensor nodes.

Background

This section introduces aspects that may be helpful in facilitating a better understanding of the embodiments of the present disclosure. Accordingly, the statements of this section are to be read in this light and are not to be understood as admissions about what is in the prior art or what is not in the prior art.

The paradigm "Internet of Things" (IoT) brings a new reality of connecting a huge amount of devices in a wireless or cellular network. Wireless Sensor Networks (WSN) may contain thousands of wireless sensor nodes and in the future it is expected only to increase. Indeed, it is predicted that a factor of 10X to 100X machines/sensors per user will be deployed in the near future. Sensor nodes may be limited in computational power and sensing capabilities and also they may operate in an unsupervised mode. A major task of these nodes is to collect information or measurements from the environment. Several applications for such machines may require nationwide coverage and easy access to the internet. Therefore a natural step to be taken is to incorporate such devices into cellular networks. In light of that, the 3$^{rd}$ Generation Partnership Project (3GPP) has started up efforts on the extension of Long-Term Evolution (LTE), for example, for supporting such machine transmission mode. It seems that a big challenge to overcome is the utter amount of devices connecting to the wireless network. This is likely to generate overloads on control channels and random access procedures.

Different from Human-to-Human (H2H) communications, many of the signals that are transmitted from Mobile Devices (MDs) may result from measurements and monitoring. Consequently, many of those signals have stochastic properties and hence can be predicted by employing adequate prediction models. A straightforward example would be the measurement of outdoor temperatures that can be predicted according to the season of the year and time of the day. In this case, if a common predictor is simultaneously used at the network side, e.g. by a Machine Application Manager (MAM) or a Machine Enhanced Base Station (MEBS), and by the MDs performing the measurement itself; no data need to be transmitted by the MD to the network if the measurements fit to the predicted value.

Similarly to time predictability, different sensing MDs may have similar correlated measurements. The simple example of the measuring of temperature from geographically close sensors can be used again. The readings of MDs may be temporally or spatially correlated. Nevertheless, those characteristics do not fully exploit all the correlations among MDs.

Various prediction schemes based on sensing similarity for wireless sensor networks are presented in HEO TAEWOOK ET AL: "Adaptive dual prediction scheme based on sensing context similarity for wireless sensor networks", ELECTRONICS LETTERS, IEE STEVENAGE, GB, vol. 50, no. 6, 13 March 2014, pages 467-469, ZHIDAN LIU ET AL: "An energy-efficient data collection scheme tor wireless sensor networks", ADVANCED COMMUNICATION TECHNOLOGY (ICACT), 2013 15TH INTERNATIONAL CONFERENCE ON, IEEE, 27 January 2013, pages 60-65, DANIELA TULONE ET AL: "An energy-efficient querying framework in sensor networks for detecting node similarities", PROCEEDINGS OF THE 9TH ACM INTERNATIONAL SYMPOSIUM ON MODELING ANALYSIS AND SIMULATION OF WIRELESS AND MOBILE SYSTEMS, MSWIM '06, 1 January 2006, page 191, JUNPEI KAMIMURA ET AL: "Energy-Efficient Clustering Method tor Data Gathering in Sensor Networks", OSAKA UNIVERSITY, 10August 2004, or QINGQUAN ZHANG ET AL: "Cooperative data reduction in wireless sensor network", GLOBAL COMMUNICATIONS CONFERENCE (GLOBECOM), 2012 IEEE, IEEE, 3 December 2012 (2012-12-03), pages 628-633.

Hence, it is desirable to improve the use of sensor correlations in wireless sensor networks in order to decrease overloads on communication channels between the MDs and other network nodes.

Summary

This is achieved by methods and apparatuses in accordance with the independent claims.

Embodiments aim at lessening overload situations in wireless networks by reducing the amount of active sensors and the amount of data to be transmitted. In fact, one object is to reduce the redundancy in the deployment of wireless sensors and to minimize the effective amount of transmissions. This may be accomplished through exploitation of some inherent properties of machine type communications. Another object is the extension of battery life of the sensors. This may be accomplished by avoiding redundant uplink transmission from the sensors.

According to a first aspect of the present disclosure, it is provided a method for a wireless sensor network. The wireless sensor network comprises a plurality of sensor nodes. Based on measurement values provided by the plurality of sensor nodes during a training period, the method includes determining a plurality of sensor node groups, wherein a sensor node group comprises a plurality of sensor nodes having correlated measurement values. Optionally, the method may further include determining, for the sensor node groups, a respective prediction model to predict future measurement values of the respective sensor node group. The method further includes receiving at least one current measurement value from a sensor node group, if the current measurement value deviates from a predicted measurement value for the sensor node group by more than a predetermined threshold.

In some embodiments, the current measurement value is not provided from the sensor node group or a representative sensor node, if the current measurement value deviates from a predicted measurement value for the sensor node group by less than the predetermined threshold.

In some embodiments, different sensor nodes are assigned to the same sensor node group if their respective measurement values fall within a same measurement value interval of a plurality of possible measurement value intervals. That is to say, different sensor nodes are assigned to the same sensor node group if their respective measurement values are or behave similar to a certain extend. Thereby the measurement values of different sensor nodes do not need to depend on each other, for example, because the sensor nodes are spatially correlated.

In some embodiments, different sensor nodes, which may be located at geographically different and distant places, are assigned to a sensor node group independent of their respective geographic locations and/or applications. Hence, some embodiments propose a type of correlation among the sensor nodes, which is also referred to as "semantic correlation" in the sequel. Semantic correlation refers to the similarity of the values sensed by the sensors at possibly geographically distant places and having possibly different fields of applications. Hence, semantic correlation is independent of spatial co-location. Even far distant sensors or sensors inferring different physical measures may produce or sense values which are correlated for some reason. Sensors sensing such semantically correlated values may be put into the same sensor node group, for example.

In some embodiments, determining the prediction model for a sensor node group includes providing said prediction model also to at least one sensor node of said sensor node group. In this way, a measurement value predictor may run on a network entity, such as a Machine Application Manager (MAM) or a Machine Enhanced Base Station (MEBS), as well as on at least one sensor node representing a sensor node group.

In some embodiments, determining a prediction model includes determining an Auto-Regressive (AR) prediction model for predicting the measurement values corresponding to a sensor node group.

In some embodiments, the prediction model predicts a measurement at time t according to $P(t) = \eta + \alpha\,(v_{i-1} - \eta) + \beta\,(v_{i-2} - \eta) + \gamma\,(v_{i-3} - \eta)$, wherein $\alpha, \beta, \gamma \in \mathbb{R}$ are sensor node group specific coefficients, and $\eta$ denotes a sensor node group specific mean value of measurement values of the training period. Hence, the AR model may be of order 3 according to some embodiments.

In some embodiments, a sensor node representing the sensor node group is selected for transmitting its current measurement value to a network node prior to the network node receiving the at least one current measurement value. This may be an effective means to reduce data traffic in the network. Only one sensor node representing its associated whole sensor node group communicates with the network.

In some embodiments, selecting the sensor node representing the sensor node group includes selecting, from the sensor node group, the sensor node having the maximum available residual energy. In other embodiments, selecting the sensor node representing the sensor node group includes selecting, from the sensor node group, the sensor node experiencing the strongest received signal level.

In some embodiments, selecting the sensor node representing the sensor node group comprises putting the remaining sensor nodes of the sensor node group in sleep mode. Again, this may reduce data traffic and save energy of the remaining sensor nodes. In some embodiments, a sensor node in sleep mode performs a measurement after a predetermined time interval to verify whether its latest measurement falls within a measurement value interval associated with the sensor node group. For this purpose, the measurement may be communicated to an associated network node, for example a Machine Application Manager (MAM) or a Machine Enhanced Base Station (MEBS). This network node may then perform the verification whether the measurement still falls within a measurement value interval associated with the current sensor node group.

In some embodiments, a sensor node is assigned to another sensor node group associated with a measurement value interval covering the sensor node's latest measurement, if the sensor node's latest measurement does not fall within the measurement value interval associated with the sensor node group. In this way, changes related to the sensor nodes may be taken into account.

According to a further aspect of the present disclosure, it is provided an apparatus for a wireless sensor network, the wireless sensor network comprising a plurality of sensor nodes. The apparatus comprises processing circuitry which is configured to determine, based on measurement values provided by the plurality of sensor nodes during a training period, a plurality of sensor node groups, a sensor node group comprising a plurality of sensor nodes with correlated measurement values. Optionally, the processing circuitry may further be configured to determine, for each sensor node group, a prediction model to predict future measurement values of the sensor node group. The apparatus also comprises receiving circuitry which is configured to receive a current measurement value from a sensor node group or a representative sensor node, if the current measurement value deviates from a predicted measurement value for the sensor node group by more than a predetermined threshold.

According to a yet further aspect of the present disclosure, it is provided a wireless sensor node which is configured to measure a physical quantity and to provide measurement values of said physical quantity to a network node. Further, the wireless sensor node is configured to receive, from the network node, a prediction model or parameters thereof to predict future measurement values of the wireless sensor node.

According to a further aspect, the present disclosure also provides a wireless sensor network comprising an apparatus for a wireless sensor network, for example a Machine Application Manager (MAM) entity or a base station, and a plurality of wireless sensor nodes according to embodiments.

Some embodiments comprise digital circuitry installed within the apparatus. Such a digital control circuitry, e.g., a Digital Signal Processor (DSP), a Field-Programmable Gate Array (FPGA), an Application-Specific Integrated Circuit (ASIC), or a general purpose processor may be coupled to memory circuitry and needs to be configured accordingly by hardware and/or software. Hence, according to yet a further aspect of the present disclosure, it is provided a machine readable storage including machine readable instructions (e.g. a computer program), when executed, to implement embodiments of the method for a wireless sensor network.

Some embodiments exploit the correlation among the sensors based on the values they sense from their respective environment. This correlation may be based on the geographical proximity (spatial correlation) of the nodes or other reasons as well. However, it is not necessary that the correlation is based on spatial proximity. The term "semantic correlation" is used to refer to the similarity of the values sensed by the sensors at possibly geographically distant places. Hence, one idea of embodiments is to exploit a "semantic correlation" among wireless sensor node readings in order to manage the transmissions of the nodes. The semantic correlation is the correlation among the reading values from the sensor nodes that are correlated, independently if they are geographically close or they measure the same target (e.g. temperature or humidity).

Hence, according to embodiments, a MAM in the network or a base station with application inspection capabilities may inspect the reading values of the sensor nodes (MDs) and infer the correlation among them. Having this correlation the network is able to manage the transmission of the sensors by optimizing the scheduling and/or by defining master and slave nodes.

According to embodiments, the wireless sensor network is agnostic to locations of the sensors and their application. Any learning algorithm may be used to estimate the correlations and the network does not require prior information neither on the sensor deployments nor about the application itself. The correlations among the MDs may be fully exploited further minimizing effortless attempts of redundant transmission.

Brief description of the Figures

Some example embodiments of apparatuses and/or methods will be described in the following by way of example only, and with reference to the accompanying figures, in which

Fig. 1    illustrates an embodiment of a wireless sensor network;

Fig. 2    shows a flowchart of a method for a wireless sensor network according to an embodiment; and

Fig. 3    shows a block diagram of an apparatus for a wireless sensor network according to an embodiment.

Description of Embodiments

Various example embodiments will now be described more fully with reference to the accompanying drawings in which some example embodiments are illustrated.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures. It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g.., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/ or "including," when used herein, specify the presence of stated features, integers, steps, operations, elements and/or components, but do not preclude the presence or addition of one or more other features, integers, steps, operations, elements, components and/ or group thereof.

It should also be noted that in some alternative implementations, the functions/ acts noted may occur out of the order noted in the figures. For example, two figures shown in succession may in fact be executed substantially concurrently or may sometimes be executed in the reverse order, depending upon the functionality/acts involved.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Portions of example embodiments and a corresponding detailed description are presented in terms of software, or algorithms and symbolic representations of operation of data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware at existing network elements or control nodes. Such existing hardware may include one or more Central Processing Units (CPUs), Digital Signal Processors (DSPs), Application-Specific Integrated Circuits, Field Programmable Gate Arrays (FPGAs), computers, or the like.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

As disclosed herein, the term "storage medium", "storage unit" or "computer readable storage medium" may represent one or more devices for storing data, including Read Only Memory (ROM), Random Access Memory (RAM), magnetic RAM, core memory, magnetic disk storage mediums, optical storage mediums, flash memory devices and/ or other tangible machine readable mediums for storing information. The term "computer-readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks.

A code segment may represent a procedure, function, subprogram, program, routine, subroutine, module, software package, class, or any combination of instructions, data structures or program statements. A code segment may be coupled to another code segment or a hardware circuit by passing and /or receiving information, data, arguments, parameters or memory contents. Information, arguments, parameters, data, etc. may be passed, forwarded, or transmitted via any suitable means including memory sharing, message passing, token passing, network transmission, etc.

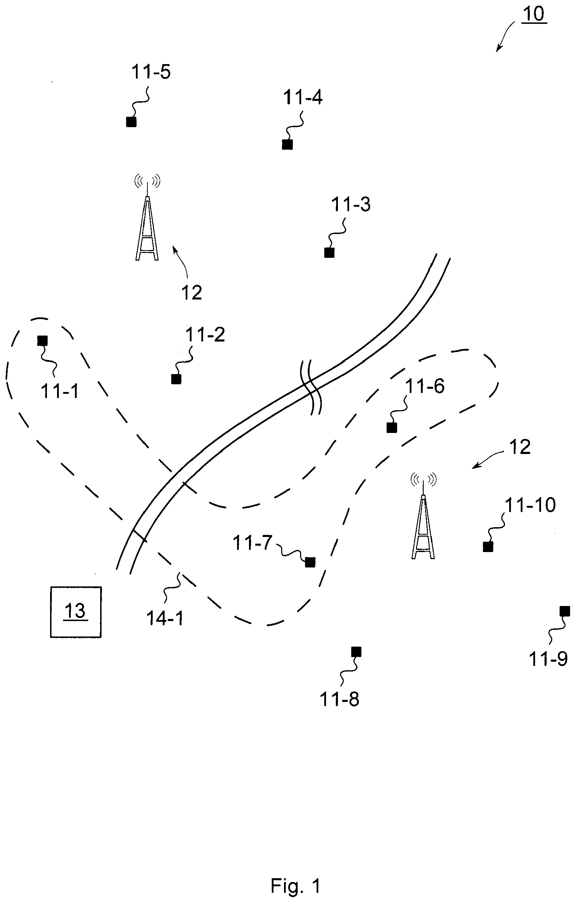

An example embodiment of a wireless sensor network 10 is schematically illustrated in **Fig. 1.**

The wireless sensor network 10 comprises a plurality of wireless sensor nodes 11-1 to 11-10, which may be distributed at distant geographical locations. In some embodiments, the wireless sensor nodes 11-$n$ $(n \in \mathbb{N})$ may be limited in computational power and sensing capabilities and also they may operate in an unsupervised mode. A wireless sensor node 11-$n$ may be understood as a converter that measures a physical quantity (e.g. temperature, pressure, etc.) and converts it into a signal which can be read by an observer or by an electronic instrument. A sensor node 11-$n$ may comprise mobile transceiver circuitry for communicating with an associated base station 12. In some embodiments, a sensor node 11-$n$ may be coupled to a smartphone, a cell phone, user equipment, a laptop, a notebook, a personal computer, a Personal Digital Assistant (PDA), a Universal Serial Bus (USB) -stick, a car, etc. A mobile transceiver may also be referred to as User Equipment (UE) or mobile in line with the 3GPP terminology.

A wireless sensor node 11-$n$ may be served by or associated with a respective base station 12, which is in reach of the sensor node's air interface. A base station 12 can be located in the fixed or stationary part of the network 10. A base station 12 may correspond to a remote radio head, a transmission point, an access point, a macro cell, a small cell, a micro cell, a femto cell, a metro cell etc. A base station can be a wireless interface of a wired network, which enables transmission of radio signals to a UE. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point etc., which may be further subdivided in a remote unit and a central unit. The base stations 12 may communicate with each other or other network entities by means of an inter-base-station interface, such as the X2 interface, for example.

In some embodiments, a base station 12 may serve its associated sensor nodes 11-$n$ in a certain geographic region, which may also be referred to as cell. Hence, the wireless sensor network 10 may be implemented as a cellular network distributed over land areas called cells, each served by at least one fixed-location transceiver, known as a cell site or base station. The term cell refers to a coverage area of radio services provided by a base station, e.g. a NodeB (NB), an eNodeB (eNB), a remote radio head, a transmission point, etc. A base station may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates. A cell is identified by a unique cell identifier.

In general, the cellular network may, for example, correspond to one of the Third Generation Partnership Project (3GPP)-standardized mobile communication networks, where the term cellular network is used synonymously to mobile communication network. The cellular network may correspond to, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, or other present and future cellular networks.

A distance between the different schematically illustrated sensor nodes 11-$n$ may be large enough that no or at least no significant spatial correlation between the sensor nodes or their readings may be assumed. For example, the sensor nodes denoted with reference signs 11-2 and 11-6 in Fig. 1 may be associated to different and (far) distant base stations or cells 12, respectively. The same may hold for sensor nodes 11-1 and 11-7, for example. The different cells and hence the sensor nodes, for example 11-2 and 11-6, may be spaced tens, hundreds or thousands of meters or even kilometers apart from each other, such that there is no spatial correlation among them, although belonging to the same wireless sensor network 10. Despite large distances between the sensor nodes 11-$n$ their readings may be more or less correlated. The environments of different and distant sensor nodes 11-$n$ and hence their measurements may be positively or negatively correlated. For example, consider a case of greenhouses where different greenhouses have different types of plants situated in them and the plants require different temperatures for suitable living condition and growth. Therefore, two green houses with similar temperature settings will have similar variations despite the fact that they can be geographically far apart.

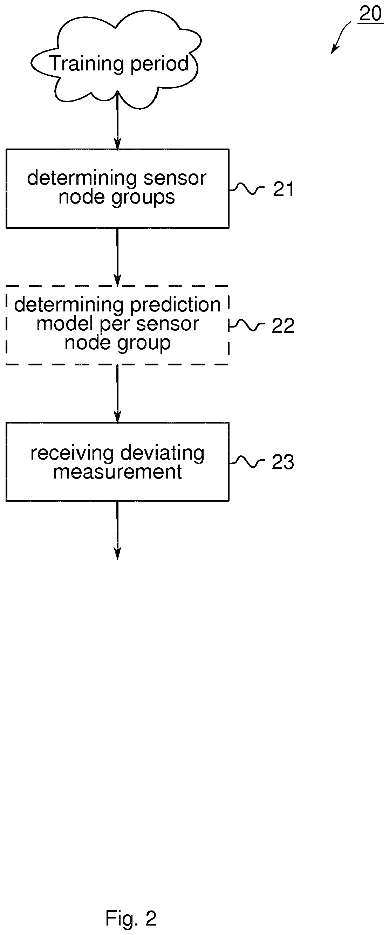

**Fig. 2** illustrates a flow chart of an example method 20 for the wireless sensor network 10 comprising the plurality of sensor nodes 11-$n$. The method 20 is based on measurement values provided by the plurality of sensor nodes 11-$n$ during a training period. This training period may be an initial training period for learning model parameters of a prediction model.

An act 21 of method 20 includes determining a plurality of (correlated) sensor node groups. Thereby a correlated sensor node group comprises a plurality of sensor nodes having correlated measurement values. According to embodiments the correlated measurement values may be semantically correlated measurement values, meaning that different sensor nodes of the plurality of sensor nodes 11-$n$ may be assigned to a correlated sensor node group independently of their respective geographic locations and/or applications. In Fig. 1 the sensor nodes 11-1, 11-6, and 11-7 may have been assigned to the same sensor node group 14-1, for example, although they may be spaced far apart from each other. Optionally, method 20 may further include an act 22 of determining, for each of the sensor node groups, a respective prediction model to predict future measurement values of the respective sensor node group. This may include determining model parameters for the prediction model or process. According to embodiments, method 20 further includes an act 23 of receiving at least one current measurement value from a sensor node group, if said current measurement value deviates from a predicted (by means of the prediction model) measurement value for the sensor node group by more than a predetermined threshold. For example, the predetermined threshold could be 5%, 10%, or 20% of a respective predicted measurement value, depending on accuracy requirements. To put it differently, the current measurement value may not be provided by the sensor node group or a sensor node representing said group, if the current measurement value deviates from a predicted measurement value for the sensor node group by less than the predetermined threshold.

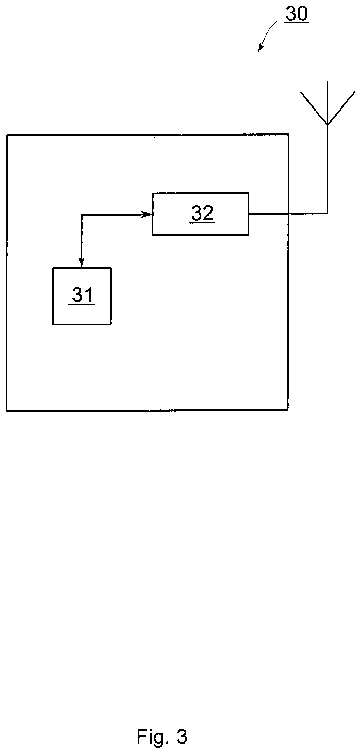

In some embodiments, the acts of method 20 may be executed or performed by a dedicated network entity, such as a Machine Application Manager (MAM) entity 13, or a base station 12 with application inspection capabilities. Hence, said MAM 13 or base station 12 may be regarded as an example embodiment of an apparatus for the wireless sensor network 10. A schematic block diagram of such an apparatus 30 is shown in **Fig. 3**.

According to embodiments, the apparatus 30 comprises processing circuitry 31 configured or operable to determine, based on measurement values provided by the plurality of sensor nodes 11-$n$ during a training period, a plurality of sensor node groups, a sensor node group comprising a plurality of sensor nodes with correlated measurement values, for example, semantically correlated measurement values. Optionally, the processing circuitry 31 may further be configured to determine, for each correlated sensor node group, a prediction model to predict future measurement values of the sensor node group. In some embodiments the processing circuitry 31 may comprise filter circuitry and/or a neural network for predicting future measurement values. Determining the prediction model may hence include determining filter coefficients and/or neural network parameters.

Also, the apparatus 30 comprises receiving circuitry 32 being configured or operable to receive a current measurement value from a sensor node group or a representative sensor node thereof. The current measurement value is only transmitted from the sensor node group or the representative sensor node thereof, if the current measurement value deviates from a predicted measurement value for the sensor node group by more than a predetermined threshold. The receiving circuitry 32, which may be coupled to an antenna device, may comprise typical receiver and/or transmitter components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more antennas, etc.

Spatial and temporal correlation among sensor network data has been a topic of particular interest for data communication researchers. However, example embodiments opt for looking into sensor network data from a different perspective. In particular, example embodiments try to focus on the issue that sensor network data can be related to each other even if they are not spatially correlated. To put it differently, even if two sensor networks (or parts thereof) are not located in close proximity of each other they can often measure same or similar physical phenomena with similar values. This type of correlation is referred to as semantic correlation. For example, consider a case of greenhouses where different greenhouses have different types of plants situated in them and the plants require different temperatures for suitable living condition and growth. Therefore, two green houses with similar temperature settings will have similar variations despite the fact that they can be geographically far apart. In embodiments, the correlated sensor nodes need not be geographically close to each other.

Now we describe an example algorithm or process to exploit the semantic correlation among sensor network data.

Let us assume that the sensor network 10 of Fig. 1 comprises $n$ sensor nodes 11-$n$. The $n$ sensor nodes 11-$n$ may detect the same physical phenomenon or quantity in a range from 1...$q$. For example, the physical quantity may be temperature, pressure, humidity, revolution (rotational frequency), etc. The measurement value range from 1...$q$ may be divided into $p$ discrete or disjoint measurement value intervals $D = d_1, d_2, d_3, ..., d_p$.

The lifetime of the network 10 may be divided into two time periods - a training period and a prediction period. The training period may last for first $T_{training}$ time-slots and after that the prediction period may begin. During the training period the sensors 11 may send their readings or measurement values to network entity, such as a MAM 13 or a base station 12. Based on this the network entity may generate a prediction model and a set of semantically correlated regions $R = R_1, R_2, R_3, ..., R_m$. Semantically correlated sensor nodes 11 may be put in one of the correlated regions based on their values compared against the discrete intervals set $D$. A threshold value $\delta$ may be used for tolerance while comparing the measurement values against the discrete intervals $d_1$, $d_2$, $d_3$, ..., $d_p$. In other words, different sensor nodes 11 may be assigned to the same correlated sensor node group $R_1$, $R_2$, $R_3$, ..., $R_m$ of the set $R$, if their respective sent measurement values fall within a same measurement value interval $d_1$, $d_2$, $d_3$, ..., $d_p$ of the intervals set $D$. Note that in embodiments the different sensor nodes 11 may be assigned to a sensor node group $R_1$, $R_2$, $R_3$, ..., or $R_m$ independent of their respective geographic locations. Instead, the semantic correlation of the respective readings may be decisive for the association of the sensor nodes 11 to the respective sensor node groups $R_1$, $R_2$, $R_3$, ..., or $R_m$. Again, semantic correlation denotes a measure for how much the *measurement values* of different sensor nodes are linked with each other.

In a correlated region or sensor node group $R_1$, $R_2$, $R_3$, ..., or $R_m$, the sensor node of said group or region having the maximum residual energy may be active and may act as a representative node for that sensor node group. This representative node may transmit its readings on behalf of the whole sensor node group. The readings of the representative node may be received by the network entity in act 23 of method 20, if said readings deviate from predicted measurement values or readings for the sensor node group represented by the representative node by more than a predetermined threshold.

Prior to transmitting and receiving the at least one current measurement value (act 23), a sensor node representing the sensor node group $R_1$, $R_2$, $R_3$, ..., or $R_m$ may be selected for transmitting its current measurement value to the network node, such as MAM 13 or a base station 12, on behalf of his correlated sensor node group. In some embodiments, selecting the sensor node representing its sensor node group $R_1$, $R_2$, $R_3$, ..., or $R_m$ may comprise selecting, from the respective sensor node group, the sensor node having the maximum available residual energy. For example, the residual energy may depend on a charge condition of a battery. Alternatively or additionally, selecting the sensor node representing its sensor node group $R_1$, $R_2$, $R_3$, ..., or $R_m$ may comprise selecting, from the respective sensor node group, the sensor node experiencing the strongest received signal level from its associated base station. This may indicate that the sensor node experiences good communication channel conditions. Hence, the node's communication with the network 10 may be most reliable and/or most energy preserving.

Other sensors from a correlated region or sensor node group $R_1$, $R_2$, $R_3$, ..., or $R_m$ may go to sleep mode in the meantime as they do not need to transmit. That is to say, selecting the sensor node representing the sensor node group may also comprise putting the remaining sensor nodes of the respective sensor node group in sleep mode. Thereby the term "sleep mode" may refer to a low power mode for a wireless sensor node 11 which is not acting as representative node. In some embodiments, a group's representative node may not need to transmit anything, if the measurement value predicted by the group's respective prediction model lies within a predefined error margin $\varepsilon$.

After predefined time duration $T_{round}$ a next sensor node 11 having the highest residual energy and/or experiencing the strongest received signal level may be selected as a next representative node of the group or correlated region. This may be advantageous to refrain from the same (representative) sensor node from draining its energy. Sensor nodes 11 in sleep mode may sense their environment or physical quantity every $T_{sleep}$ time units (for example, seconds, hours, days, etc.) to make sure that the current measurement value is still valid for the correlated region $R_1$, $R_2$, $R_3$, ..., or $R_m$ they belong to. In other words, a sensor node in sleep mode may perform a measurement after a predetermined time interval to verify whether its latest measurement still falls within a measurement value interval associated with its sensor node group. If the measurement value still satisfies the correlated region or the associated interval $d_1$, $d_2$, $d_3$, ..., or $d_p$, then the sensor node may go to sleep for another $T_{sleep}$ time units. Otherwise, the respective sensor node may find an appropriate correlated region that matches the corresponding discrete interval in discrete intervals set $D$. Hence, if the sensor node's latest measurement does not fall within the measurement value interval $d_1$, $d_2$, $d_3$, ..., or $d_p$ associated with the sensor node group $R_1$, $R_2$, $R_3$, ..., or $R_m$, the sensor node may be assigned to another sensor node group associated with a measurement value interval covering the sensor node's latest measurement. This assignment may be done by MAM 13 or a base station 12, for example.

Note that information on which sensor node will be transmitting and which one will sleep may be transmitted via a downlink control channel, for example.

The proposed example process for exploiting the semantic correlation among the sensor nodes is summarized in algorithm 1 below:

---

**Algorithm 1** Exploiting Semantic Correlation

---

1:    Divide the expected values of the sensor readings in a set of $p$ discrete intervals $D = d_1$, $d_2$, $d_3$, ..., $d_p$.

2:    Initially, all $n$ sensor nodes $S = s_1$, $s_2$, $s_3$, ..., $s_n$ will send their readings to the base station for a training time period of $T_{training}$.

3:    Based on this the base station will generate a prediction model using **ComputePredictionModel()** and a set of semantically correlated regions $R = R_1$, $R_2$, $R_3$, ..., $R_m$ based on a threshold $\delta$ comparing with the discrete intervals set $D$. Here, $m <= p$.

(continued)

| **Algorithm 1** Exploiting Semantic Correlation |
| --- |
| 4:    In a correlated region a sensor node having the strongest received signal (RSS) from the base station (BS) can be *active* and transmit on behalf of the region. This node is also called as the *representative* node. Other sensors in the region may go to *sleep* mode. |
| 5:    The *representative* node may choose not to transmit anything if the predicted value lies within $\varepsilon$ error margin. |
| 6:    After a predefined time duration $\mathbf{T_{round}}$ the next node having the highest RSS or with highest residual energy will be selected as the *representative* node. This is to refrain the *representative node* from draining it's energy. |
| 7:    Nodes in sleep mode sense the environment after every $\mathbf{T_{sleep}}$ duration to make sure that the prediction model still accurately reflects the scenario. If *Yes* it goes to sleep for another $\mathbf{T_{sleep}}$ duration. Otherwise, it finds an appropriate interval in **D** and belongs to a new correlated region. |

| **Algorithm 2** ComputePredictionModel() |
| --- |
| 1:    $V$ is an empty queue where $N$ training data during $T_{training}$ time-period will be kept. So, $V \leftarrow 0$. |
| 2:    **for** $i$ = 1 to $n$ **do** |
| 3:    Read $v_i$ and put $v_i$ into the queue $V$. |
| 4:    **end for** |
| 5:    Wait for $T_{noise}$ time units. |
| 6:    $(\alpha, \beta, \gamma) \leftarrow$ **computeCoefficients**(). |
| 7:    $b(t_{noise}) \leftarrow$ **computeVariance**(). |

Embodiments allow energy saving based on predicting future measurement values of the sensors 11. Therefore, all the sensors in the same correlated region need not send information to the base station and the energy spent in communicating to the base station may be saved. Some embodiments may be based on a prediction model that is used by the network entity (e.g., MAM 13 or a base station 12) and also the representative sensor node. That is to say, determining the prediction model for a sensor node group may comprise providing said prediction model or parameters thereof also to at least one sensor node 11 of said sensor node group, for example the representative sensor node. The representative sensor node may be configured to measure a physical quantity and to provide measurement values of said physical quantity to a network node (e.g., MAM 13 or a base station 12). The representative sensor node may be configured to receive, from the network node (during or after the training period), the prediction model or parameters thereof to predict future measurement values of the wireless sensor node. The representative sensor node may be configured to compare its actual measurement values to the predicted measurement values (during the prediction period). The representative sensor node may be configured to transmit its current measurement value to the network node, only if said current measurement value deviates from a predicted (by means of the prediction model) measurement value by more than a predetermined threshold.

Note that in embodiments in principle any prediction or learning algorithm can be used to infer the correlation between the different sensor node readings. For example, the prediction model may be a linear prediction model. Linear prediction is a mathematical operation where future values of a discrete-time signal are estimated as a linear function of previous samples, here measurement values. In some embodiments, the prediction model may be an Auto-Regressive (AR) model which is a representation of a type of random process. As such, it may describe certain time-varying processes in nature, economics, etc. The autoregressive model specifies that the output variable depends linearly on its own previous values. An AR model can be viewed as the output of an all-pole infinite impulse response filter whose input is white noise. It is a special case of the more general Auto-Regressive-Moving-Average (ARMA) model of time series.

An example prediction model may require a time period $T_{training}$ for training. However a prediction window may be kept very small to ignore the trends and seasonal components. A time series is usually decomposed into a trend component that grows slowly as time progresses, a seasonal component with some periodicity and a stationary component. However, the first two components increase the complexity of learning and predicting the model greatly. Therefore embodiments propose to ignore the first two components by keeping the prediction window small, for example to only three. One example embodiment implements an auto-regressive model AR($p$) with a prediction window $p$ = 3. To be more specific, a prediction at time $t > t_{i-1}$ may be given according to $P(t) = \eta + \alpha (v_{i-1} - \eta) + \beta (v_{i-2} - \eta) + \gamma (v_{i-3} - \eta)$. Here, $\alpha, \beta, \gamma \in \mathbb{R}$ and $\eta$ denotes a non-zero mean of the training measurement values. We also compute the standard deviation of the white noise in the form of $b(T_{noise})$. These five parameters uniquely describe the AR(3) model for a given set of learning measurement data $v_1, v_2, v_3, ..., v_n$. The computed parameters may be used by the network node (e.g., MAM 13 or a base station 12) and a respective representative sensor node to predict future measurements values.

The function *computeCoefficients()* of aforementioned algorithm 2 may compute the coefficients $\alpha, \beta, \gamma$ by a least-squares regression technique, for example. It also computes the value of $\eta$. After computing these four values algorithm 2 computes the variance after $T_{noise}$ time units by invoking *computeVariance()*. This may be performed by computing the prediction error $e_i = P_i - \bar{v}_i$ for $i = 1, 2, ..., N$ and also the mean of the prediction errors $\bar{e}$. Therefore, the

$$b(T_{noise}) = \left( \sum_{i=1}^{N} (e_i - \bar{e}.)^2 / N - 1 \right)^{-1/2}.$$

variance may be calculated as, However, in this example algorithm we have not used variance for any calculation later on. Again note that in other embodiments principally any prediction or learning algorithm can be used to infer the correlation between the different sensor node readings.

Embodiments allow to efficiently exploit correlations among any machines in a network in order to save transmission attempts. This mayresult in a support of more devices per cell and reduces energy consumption of devices. Embodiments are agnostic to location and application of the machines. Additionally, embodiments may fully exploit and kind of correlation among sensors.

The description and drawings merely illustrate the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

Functional blocks shall be understood as functional blocks comprising circuitry that is adapted for performing a certain function, respectively. Hence, a "module or entity for s.th." may as well be understood as a "module or entity being adapted or suited for s.th.". A module or entity being adapted for performing a certain function does, hence, not imply that such means necessarily is performing said function (at a given time instant).

Functions of various elements shown in the figures, including any functional blocks may be provided through the use of dedicated hardware, such as "a processor", "a controller", etc. as well as hardware capable of executing software in association with appropriate software. Moreover, any entity described herein as functional block, may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

**Claims**

1.  Method (20) performed by a central node (12, 13) of
    a wireless sensor network (10) comprising a plurality of sensor Inodes (11), the method comprising:

    based on measurement values provided by the plurality of sensor nodes (11) during a training period, determining (21) a plurality of sensor node groups (14), a sensor node group comprising a plurality of sensor nodes having correlated measurement values, wherein different sensor nodes (11) are assigned to the same sensor node group (14) independent of their respective geographic locations and/or applications, if their respective measurement values fall within a same measurement value interval;
    determining (22), for the sensor node groups (14), a respective prediction model to predict future measurement values ofthe respective sensor node group (14) and providing the respective prediction model to one sensor node (11) of the respective sensor node group; and
    receiving (23) at least one current measurement value from a sensor node group (14), if the current measurement value deviates from a predicted measurement value for the sensor node group (14) by more than a predetermined threshold,

wherein the current measurement value is not provided from the sensor node group (14), if the current measurement value deviates from a predicted measurement value for the sensor node group by less than the predetermined threshold.

2. The method (20) of claim 1, wherein determining (22) a prediction model comprises determining an autoregressive prediction model.

3. The method (20) of claim 1, wherein the prediction model $P^{(t)}$ predicts a measurement at time $t$ according to

$$P(t) = \eta + \alpha (v_{i\text{-}1} - \eta) + \beta (v_{i\text{-}2} - \eta) + \gamma (v_{i\text{-}3} - \eta),$$

wherein $\alpha, \beta, \gamma \in \mathbb{R}$ are sensor node group specific coefficients, $v_i{}^i$ are learning measurement data and $\eta$ denotes a sensor node group specific mean value ofmeasurement values ofthe training period.

4. The method (20) of claim 1, wherein prior to receiving the at least one current measurement value a sensor node (11) representing the sensor node group (14) is selected for transmitting its current measurement value to a network node (12; 13).

5. The method (20) of claim 4, wherein selecting the sensor node (11) representing the sensor node group comprises selecting, from the sensor node group, the sensor node having the maximum available residual energy.

6. The method (20) of claim 4, wherein selecting the sensor node (11) representing the sensor node group (14) comprises selecting, from the sensor node group, the sensor node experiencing the strongest received signal level.

7. The method (20) of claim 4, wherein selecting the sensor node (11) representing the sensor node group (14) comprises putting the remaining sensor nodes ofthe sensor node group in sleep mode.

8. The method (20) of claim 7, wherein a sensor node (11) in sleep mode performs a measurement after a predetermined time interval to verify whether its latest meas- urement falls within a measurement value interval associated with the sensor node group (14).

9. The method (20) of claim 8, comprising:
if the sensor node's latest measurement does not fall within the measurement value interval associated with the sensor node group (14), assigning the sensor node (11) to another sensor node group associated with a measurement value interval covering the sensor node's latest measurement.

10. Central node (12; 13; 30) for a wireless sensor network (10), the wireless sensor network comprising a plurality of sensor nodes (11), the central node comprising processing circuitry (31) configured to
determine, based on measurement values provided by the plurality of sensor nodes (11) during a training period, a plurality of sensor node groups (14), a sensor node group (14) comprising a plurality of sensor nodes with correlated measurement values, wherein different sensor nodes (11) are assigned to the same sensor node group (14) independent of their respective geographic locations and/or applications, if their respective measurement values fall within a same measurement value interval;
determine (22), for the sensor node groups (14), a respective prediction model to predict future measurement values of the respective sensor node group (14);
provide the respective prediction model to one sensor node (11) of the respective sensor node group; and
receiving circuitry (32) configured to
receive a current measurement value from a sensor node group (14), if the current measurement value deviates from a predicted measurement value for the sensor node group (14) by more than a predetermined threshold, wherein the current measurement value is not received from the sensor node group (14), if the current measurement value deviates from a predicted measurement value for the sensor node group by less than the predetermined threshold.

**Patentansprüche**

1.  Verfahren (20), das von einem zentralen Knoten (12, 13) eines drahtlosen Sensornetzwerks (10), das eine Vielzahl von Sensorknoten (11) umfasst, durchgeführt wird, wobei das Verfahren Folgendes umfasst:

    auf Basis von Messwerten, die von der Vielzahl von Sensorknoten (11) während einer Trainingsperiode bereitgestellt werden,
    Bestimmen (21) einer Vielzahl von Sensorknotengruppen (14), wobei eine Sensorknotengruppe eine Vielzahl von Sensorknoten mit korrelierten Messwerten umfasst, wobei verschiedene Sensorknoten (11) unabhängig von deren jeweiligen geografischen Standorten und/oder Anwendungen derselben Sensorknotengruppe (14) zugewiesen werden,
    wenn deren jeweilige Messwerte in ein selbes Messwertintervall fallen;
    Bestimmen (22) eines jeweiligen Vorhersagemodells für die Sensorknotengruppen (14), um zukünftige Messwerte der jeweiligen Sensorknotengruppe (14) vorherzusagen, und
    Bereitstellen des jeweiligen Vorhersagemodells für einen Sensorknoten (11) der jeweiligen Sensorknotengruppe und Empfangen (23) von mindestens einem aktuellen Messwert von einer Sensorknotengruppe (14), wenn der aktuelle Messwert von einem vorhergesagten Messwert für die Sensorknotengruppe (14) um mehr als einen vorbestimmten Schwellwert abweicht,
    wobei der aktuelle Messwert von der Sensorknotengruppe (14) nicht bereitgestellt wird, wenn der aktuelle Messwert von einem vorhergesagten Messwert für die Sensorknotengruppe um weniger als den vorbestimmten Schwellwert abweicht.

2.  Verfahren (20) nach Anspruch 1, wobei das Bestimmen (22) eines Vorhersagemodells das Bestimmen eines autoregressiven Vorhersagemodells umfasst.

3.  Verfahren (20) nach Anspruch 1, wobei das Vorhersagemodell *P(t)* eine Messung zur Zeit t gemäß Folgendem vorhersagt

$$P(t) = \eta + \alpha \, (v_{i-1} - \eta) + \beta \, (v_{i-2} - \eta) + \gamma \, (v_{i-3} - \eta),$$

    wobei $\alpha, \ \beta, \ \gamma \ \in \ \mathbb{R}$ sensorknotengruppenspezifische Koeffizienten sind, $v_i$ Lernmessdaten sind und $\eta$ einen sensorknotengruppenspezifischen Mittelwert von Messwerten der Trainingsperiode bezeichnet.

4.  Verfahren (20) nach Anspruch 1, wobei vor dem Empfangen des mindestens einen aktuellen Messwerts ein Sensorknoten (11), der die Sensorknotengruppe (14) repräsentiert, zum Übertragen seines aktuellen Messwerts zu einem Netzwerkknoten (12; 13) ausgewählt wird.

5.  Verfahren (20) nach Anspruch 4, wobei das Auswählen des Sensorknotens (11), der die Sensorknotengruppe repräsentiert, das Auswählen des Sensorknotens mit der maximalen verfügbaren Restenergie umfasst.

6.  Verfahren (20) nach Anspruch 4, wobei das Auswählen des Sensorknotens (11), der die Sensorknotengruppe (14) repräsentiert, das Auswählen des Sensorknotens, der den stärksten empfangenen Signalpegel erlebt, umfasst.

7.  Verfahren (20) nach Anspruch 4, wobei das Auswählen des Sensorknotens (11), der die Sensorknotengruppe (14) repräsentiert, das Versetzen der übrigen Sensorknoten der Sensorknotengruppe in einen Ruhemodus umfasst.

8.  Verfahren (20) nach Anspruch 7, wobei ein Sensorknoten (11) in einem Ruhemodus nach einem vorbestimmten Zeitintervall eine Messung durchführt, um zu verifizieren, ob seine letzte Messung in ein Messwertintervall fällt, das mit der Sensorknotengruppe (14) verknüpft ist.

9.  Verfahren (20) nach Anspruch 8, das Folgendes umfasst:
    wenn die letzte Messung des Sensorknotens nicht in das Messwertintervall fällt, das mit der Sensorknotengruppe (14) verknüpft ist, Zuweisen des Sensorknotens (11) zu einer anderen Sensorknotengruppe, die mit einem Messwertintervall verknüpft ist, das die letzte Messung des Sensorknotens abdeckt.

10. Zentraler Knoten (12; 13; 30) für ein drahtloses Sensornetzwerk (10), wobei das drahtlose Sensornetzwerk eine Vielzahl von Sensorknoten (11) umfasst, wobei der zentrale Knoten Folgendes umfasst:

eine Verarbeitungsschaltung (31), die zu Folgendem ausgelegt ist

Bestimmen auf Basis von Messwerten, die von der Vielzahl von Sensorknoten (11) während einer Trainingsperiode bereitgestellt werden, einer Vielzahl von Sensorknotengruppen (14), wobei eine Sensorknotengruppe (14) eine Vielzahl von Sensorknoten mit korrelierten Messwerten umfasst, wobei verschiedene Sensorknoten (11) unabhängig von deren jeweiligen geografischen Standorten und/oder Anwendungen derselben Sensorknotengruppe (14) zugewiesen werden, wenn deren jeweilige Messwerte in ein selbes Messwertintervall fallen;

Bestimmen (22) eines jeweiligen Vorhersagemodells für die Sensorknotengruppen (14), um zukünftige Messwerte der jeweiligen Sensorknotengruppe (14) vorherzusagen;

Bereitstellen des jeweiligen Vorhersagemodells für einen Sensorknoten (11) der jeweiligen Sensorknotengruppe und eine Empfangsschaltung (32), die zu Folgendem ausgelegt ist

Empfangen eines aktuellen Messwerts von einer Sensorknotengruppe (14), wenn der aktuelle Messwert von einem vorhergesagten Messwert für die Sensorknotengruppe (14) um mehr als einen vorbestimmten Schwellwert abweicht, wobei der aktuelle Messwert von der Sensorknotengruppe (14) nicht empfangen wird, wenn der aktuelle Messwert von einem vorhergesagten Messwert für die Sensorknotengruppe um weniger als den vorbestimmten Schwellwert abweicht.

## Revendications

1. Procédé (20) exécuté par un noeud central (12, 13) d'un réseau de capteurs sans fil (10) comprenant une pluralité de noeuds capteurs (11), le procédé comprenant de :

sur la base de valeurs de mesure fournies par la pluralité de noeuds capteurs (11) pendant une période d'apprentissage,

déterminer (21) une pluralité de groupes de noeuds capteurs (14), un groupe de noeuds capteurs comprenant une pluralité de noeuds capteurs ayant des valeurs de mesure corrélées, dans lequel différents noeuds capteurs (11) sont affectés au même groupe de noeuds capteurs (14) indépendamment de leurs localisations géographiques et/ou de leurs applications respectives si leurs valeurs de mesure respectives se situent dans un même intervalle de valeurs de mesure;

déterminer (22), pour les groupes de noeuds capteurs (14), un modèle de prédiction respectif pour prédire de futures valeurs de mesure du groupe de noeuds capteurs respectif (14) et fournir le modèle de prédiction respectif à un noeud capteur (11) du groupe de noeuds capteurs respectif; et

recevoir (23) au moins une valeur de mesure actuelle à partir d'un groupe de noeuds capteurs (14) si la valeur de mesure actuelle s'écarte d'une valeur de mesure prédite pour le groupe de noeuds capteurs (14) de plus d'un seuil prédéterminé,

dans lequel la valeur de mesure actuelle n'est pas fournie par le groupe de noeuds capteurs (14) si la valeur de mesure actuelle s'écarte d'une valeur de mesure prédite pour le groupe de noeuds capteurs de moins du seuil prédéterminé.

2. Procédé (20) selon la revendication 1, dans lequel la détermination (22) d'un modèle de prédiction comprend la détermination d'un modèle de prédiction autorégressif.

3. Procédé (20) selon la revendication 1, dans lequel le modèle de prédiction $P(t)$ prédit une mesure à l'instant t selon

$$P(t) = \eta + \alpha\,(v_{i-1} - \eta) + \beta\,(v_{i-2} - \eta) + \gamma\,(v_{i-3} - \eta),$$

où $\alpha,\ \beta,\ \gamma \in \mathbb{R}$ sont des coefficients spécifiques au groupe de noeuds capteurs, $v_i$ sont des données de mesure d'apprentissage et $\eta$ désigne une valeur moyenne spécifique au groupe de noeuds capteurs de valeurs de mesure de la période d'apprentissage.

4. Procédé (20) selon la revendication 1, dans lequel, avant de recevoir la au moins une valeur de mesure actuelle, un noeud capteur (11) représentant le groupe de noeuds capteurs (14) est sélectionné pour transmettre sa valeur de mesure actuelle à un noeud de réseau (12; 13).

**5.** Procédé (20) selon la revendication 4, dans lequel la sélection du noeud capteur (11) représentant le groupe de noeuds capteurs comprend de sélectionner, parmi le groupe de noeuds capteurs, le noeud capteur ayant le maximum d'énergie résiduelle disponible.

**6.** Procédé (20) selon la revendication 4, dans lequel la sélection du noeud capteur (11) représentant le groupe de noeuds capteurs (14) comprend de sélectionner, parmi le groupe de noeuds capteurs, le noeud capteur présentant le niveau de signal reçu le plus fort.

**7.** Procédé (20) selon la revendication 4, dans lequel la sélection du noeud capteur (11) représentant le groupe de noeuds capteurs (14) comprend de mettre en mode veille les noeuds capteurs restants du groupe de noeuds capteurs.

**8.** Procédé (20) selon la revendication 7, dans lequel un noeud capteur (11) en mode veille effectue une mesure après un intervalle de temps prédéterminé pour vérifier si sa dernière mesure se situe dans un intervalle de valeurs de mesure associé au groupe de noeuds capteurs (14) .

**9.** Procédé (20) selon la revendication 8, comprenant de :
si la dernière mesure du noeud capteur ne se situe pas dans l'intervalle de valeurs de mesure associé au groupe de noeuds capteurs (14), affecter le noeud capteur (11) à un autre groupe de noeuds capteurs associé à un intervalle de valeurs de mesure couvrant la dernière mesure du noeud capteur.

**10.** Noeud central (12; 13; 30) pour un réseau de capteurs sans fil (10), le réseau de capteurs sans fil comprenant une pluralité de noeuds capteurs (11), le noeud central comprenant :
un circuit de traitement (31) configuré pour :

déterminer, sur la base de valeurs de mesure fournies par la pluralité de noeuds capteurs (11) pendant une période d'apprentissage, une pluralité de groupes de noeuds capteurs (14), un groupe de noeuds capteurs (14) comprenant une pluralité de noeuds capteurs avec des valeurs de mesure corrélées, dans lequel différents noeuds capteurs (11) sont affectés au même groupe de noeuds capteurs (14) indépendamment de leurs localisations géographiques et/ou de leurs applications respectives si leurs valeurs de mesure respectives se situent dans un même intervalle de valeurs de mesure;
déterminer (22), pour les groupes de noeuds capteurs (14), un modèle de prédiction respectif pour prédire de futures valeurs de mesure du groupe de noeuds capteurs respectif (14);
fournir le modèle de prédiction respectif à un noeud capteur (11) du groupe de noeuds capteurs respectif; et
un circuit de réception (32) configuré pour recevoir une valeur de mesure actuelle à partir d'un groupe de noeuds capteurs (14) si la valeur de mesure actuelle s'écarte d'une valeur de mesure prédite pour le groupe de noeuds capteurs (14) de plus d'un seuil prédéterminé, dans lequel la valeur de mesure actuelle n'est pas reçue à partir du groupe de noeuds capteurs (14) si la valeur de mesure actuelle s'écarte d'une valeur de mesure prédite pour le groupe de noeuds capteurs de moins que le seuil prédéterminé.

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Adaptive dual prediction scheme based on sensing context similarity for wireless sensor networks. **HEO TAEWOOK et al.** ELECTRONICS LETTERS. IEE STEVENAGE, 13 March 2014, vol. 50, 467-469
- An energy-efficient data collection scheme tor wireless sensor networks. **ZHIDAN LIU et al.** ADVANCED COMMUNICATION TECHNOLOGY (ICACT), 2013 15TH INTERNATIONAL CONFERENCE ON. IEEE, 27 January 2013, 60-65
- An energy-efficient querying framework in sensor networks for detecting node similarities. **DANIELA TULONE et al.** PROCEEDINGS OF THE 9TH ACM INTERNATIONAL SYMPOSIUM ON MODELING ANALYSIS AND SIMULATION OF WIRELESS AND MOBILE SYSTEMS. MSWIM, 01 January 2006, 191
- **JUNPEI KAMIMURA et al.** Energy-Efficient Clustering Method tor Data Gathering in Sensor Networks. OSAKA UNIVERSITY, 10 August 2004
- Cooperative data reduction in wireless sensor network. **QINGQUAN ZHANG et al.** GLOBAL COMMUNICATIONS CONFERENCE (GLOBECOM). IEEE, 03 December 2012, 628-633